# EUROPEAN PATENT APPLICATION

(11) **EP 3 370 236 A1**
(43) Date of publication of application: **05.09.2018**
(21) Application number: 16860070.8
(22) Date of filing: 27.07.2016
(51) Int. Cl.: G21C 19/19, G21D 3/00

(54) **PROGRAM FOR MANAGING MOVEMENTS OF NUCLEAR FUELS AND NUCLEAR FUEL MOVEMENT MANAGEMENT METHOD APPLIED THERETO**

(30) Priority: 28.10.2015 KR 20150150229
(71) Applicant: Korea Hydro & Nuclear Power Co., Ltd, Gyeongju-si, Gyeongsangbuk-do 38120 (KR)
(72) Inventor: JUNG, Sung-In, Uljin-gun Gyeongsangbuk-do 36313 (KR); PARK, Chan-Yan, Uljin-gun Gyeongsangbuk-do 36313 (KR); LEE, Taek-Yoon, Uljin-gun Gyeongsangbuk-do 36313 (KR); KO, Byeong-Kil, Uljin-gun Gyeongsangbuk-do 36313 (KR)
(74) Representative: Stöckeler, Ferdinand
(86) International application number: PCT/KR2016/008199
(87) International publication number: WO 2017/073886

(57) **Abstract**

The present invention relates to a method for managing the movements of nuclear fuels, comprising: step (a) for loading a storage status map in which storage racks of an SFPR where spent fuels are stored and an NFS where new fuels are stored are mapped; step (b) for assigning the storage locations of nuclear fuels and the colors thereof in the storage status map; step (c) for receiving a pattern type input of tasks for designating the order in which nuclear fuels are moved and the locations to which the nuclear fuels are moved, and generating a movement flowchart; and step (d) for updating the storage status map according to the level at which the movement flowchart has progressed. The present invention has an advantage in that it is possible to quickly create a nuclear fuel movement flowchart by automating all fuel movement works requiring the unloading and loading of nuclear fuels, which enables the workload of about 30 man-days, required per cycle for each reactor, to be done in three man-hours, thereby achieving a significant reduction in working time.

## Description

### [Technical Field]

The present invention relates to a program for managing movements of nuclear fuels and a method of managing movements of nuclear fuels applied thereto, and more particularly, to a movement management program and method for creating a flowchart of nuclear fuels to unloading and store nuclear fuels.

### [Background Art]

Nuclear power plant operations require safe movement of nuclear fuels and accuracy of fuel loading. Therefore, operators must carry out detailed verification to check whether there is no mistake in a created flowchart, such as order, targets, and types of fuels, and the like, in the process of unloading, moving, and loading of nuclear fuels stored in a storage rack or a reactor of a fuel building. Erroneous verification or an error may bring about a critical accident, output unbalance, unexpected reactor shutdown of a reactor at a plant, and, in the worst case scenario, it may lead to a radioactive material leak.

As for fuels of a nuclear power plant, new fuels and a portion of spent fuels are reloaded. Fuels are assigned a unique number and must be loaded to exact locations according to the nuclear design, such as concentration, burn-up, and the like. To this end, a storage location of new fuels and the storage locations of reloaded fuels of spent fuels and discharged fuels are performed based on a planned execution. In detail, for example, in the case of OPR1000 nuclear power plant, 177 fuel assemblies are loaded in a reactor, while in the case of APR1400 nuclear power plant, 241 fuel assemblies are loaded in a reactor. About 1400 fuel storage racks are provided in a fuel building. In order to reload nuclear fuels to a reactor, a movement flowchart of nuclear fuels, such as receiving new fuels and storing the new fuels in a fuel building, unloading fuels from a reactor and storing the same in the fuel building, or loading the new fuels and reused fuels of the fuel building to the reactor, and the like, must be created.

Since about 484 fuel movements occur in the OPR1000 nuclear power plant and about 642 fuel movements occur in the APR1400 nuclear power plant for reloading, it takes much time and effort to create and verify the nuclear fuel movement flowchart. In the related art, creation and verification of the flowchart of nuclear fuels are made manually. In the related art, since a person creates and verifies a movement path, order, and the like, of nuclear fuels through a manual operation, there is a possibility of a human error and a huge amount of time is required. As a result, a method for safely and efficiently managing movements of nuclear fuels in a light-water reactor of a nuclear power plant is required.

### [Related art document]

### [Patent document]

(Patent document 1) Korean Patent Registration No. 156488

### [Disclosure]

### [Technical Problem]

It is, therefore, an object of the present invention to provide a program for managing the movements of nuclear fuels, in which all fuel movement tasks for unloading and loading of nuclear fuels are effectively designed such that a flowchart of nuclear fuels may be quickly and precisely created.

### [Technical Solution]

According to an aspect of the present invention, there is provided a method for managing movements of nuclear fuels, including: step (a) of loading a storage status map in which storage racks of a spent fuel pool rack (SFPR) where spent fuels are stored and an new fuel storage (NFS) where new fuels are stored are mapped; step (b) of designating storage locations and colors of nuclear fuels in the storage status map; step (c) of creating a movement flowchart upon receiving movement order and location designation tasks of nuclear fuel in a pattern form; and step (d) of updating the storage status map according to a degree of performing the movement flowchart.

Preferably, in step (b), nuclear fuels may be classified into three types of new fuels, reused fuels, and discharged fuels and stored in the storage status map.

Preferably, in step (c), the movement flowchart may be created upon receiving codes in which an unloading region of nuclear fuels and a loading region of nuclear fuels are abbreviated.

Preferably, in step (c), the movement flowchart may be created in unloading or loading order based on a predetermined pattern upon receiving a region to be unloaded or loaded in the storage status, as a region range, from a user.

According to another aspect of the present invention, there is provided a computer program stored in a medium to execute, in a computer which includes a database storing a storage status map in which storage racks of the SFPR storing spent fuels and NFS storing new fuels are mapped and a processor creating a movement flowchart of nuclear fuels using information input to the storage status map, step (a) of loading a storage status map by a processor; step (b) of receiving designated storage locations and colors of nuclear fuels in the storage status map from the user; step (c) of creating a movement flowchart by receiving, by the processor, the movement order and location designating operations of nuclear fuels in a pattern form; and step (d) of updating, by the process, the storage status map according to a degree of performing the movement flowchart and storing the updated storage status map in a database.

### [Advantageous Effects]

According to embodiments of the present invention, it is possible to quickly create a nuclear fuel movement flowchart by automating all fuel movement works requiring the unloading and loading of nuclear fuels, which enables the workload of about 30 man-days, required per cycle for each reactor, to be done in three man-hours, thereby achieving a significant reduction in working time.

Further, when automation of the flowchart is provided as in the present invention, a human error may be minimized, an error in the process of or after creating the flowchart may be easily verified, a fuel storage status of each plant may be checked in real time, and registered improved order of unloading and loading by power plants may be easily shared by patterns.

### [Description of Drawings]

FIG. 1 is a flowchart of a method for managing movements of nuclear fuels according to an embodiment of the present invention.
FIG. 2 illustrates an embodiment of data in which a nuclear fuel movement flowchart is recorded.
FIGS. 3A to 3C illustrate examples of movements of nuclear fuels according to an embodiment of the present invention.
FIGS. 4A and 4B illustrate storage status maps of nuclear fuels according to an embodiment of the present invention.
FIG. 5 illustrates an example for explaining a procedure for processing pattern information of Table 1.
FIG. 6 illustrates an example for explaining a procedure for processing pattern information of Table 1 when coordinates are not allocated according to an embodiment of the present invention.
FIG. 7 illustrates an example for explaining a procedure for processing pattern information of Table 1 when a fuel movement pattern starts from a core according to an embodiment of the present invention.
FIG. 8 illustrates an example of a Z order pattern set according to an embodiment of the present invention.
FIG. 9 illustrates a state in which a fuel storage status is recorded and updated on a storage status map according to an embodiment of the present invention.

### [Best Modes]

Hereinafter, the present invention will be described in detail with reference to the accompanying drawings. However, the present invention is not limited to or limited by the exemplary embodiments. Like reference numerals in the drawings denote members performing substantially the same function.

The objects and effects of the present invention may be understood or clarified naturally by the following description and the objects and effects of the present invention are not limited only by the following description. Also, in describing the present invention, if a detailed description of known functions or components associated with the present invention unnecessarily obscures the gist of the present invention, the detailed description will be omitted.

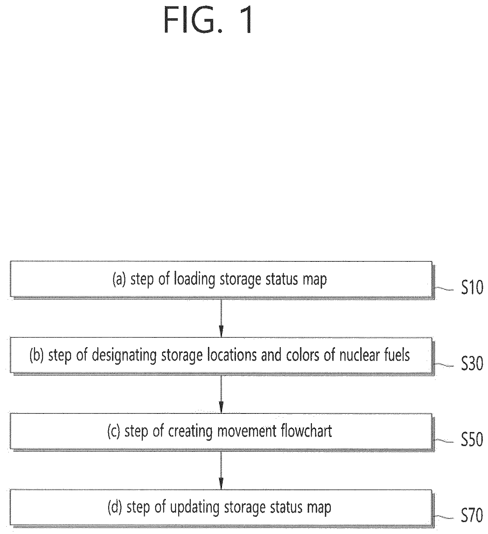

FIG. 1 is a flowchart of a method for managing movements of nuclear fuels according to an embodiment of the present invention. Referring to FIG. 1, the method for managing nuclear fuels may include step (a) of loading a storage status map (S10), step (b) of designating nuclear fuels (S30), step (c) of generating a movement flowchart (S50), and step (d) of updating the storage status map (S70).

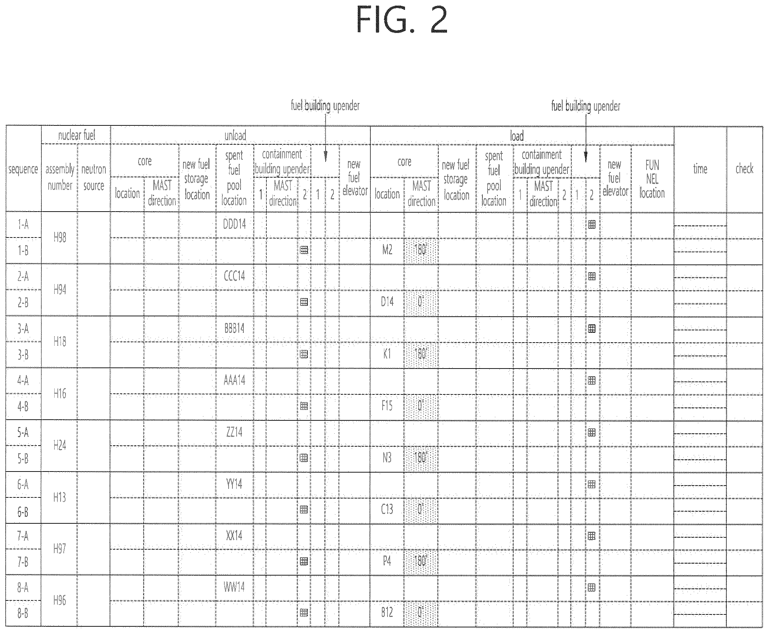

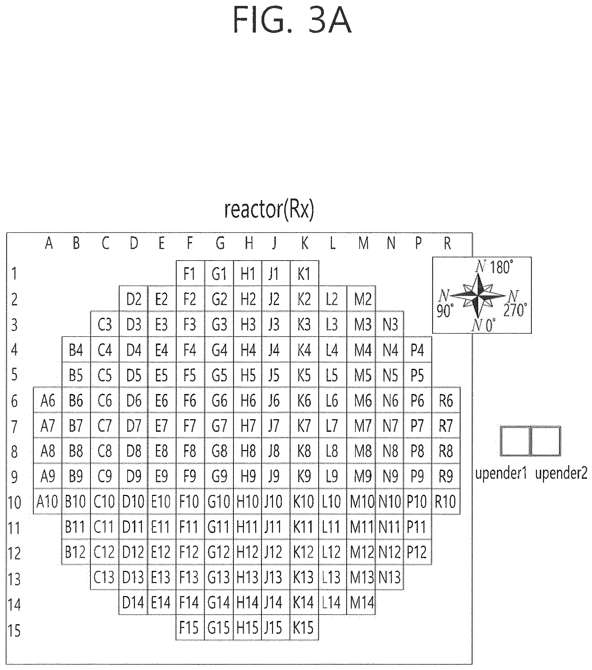

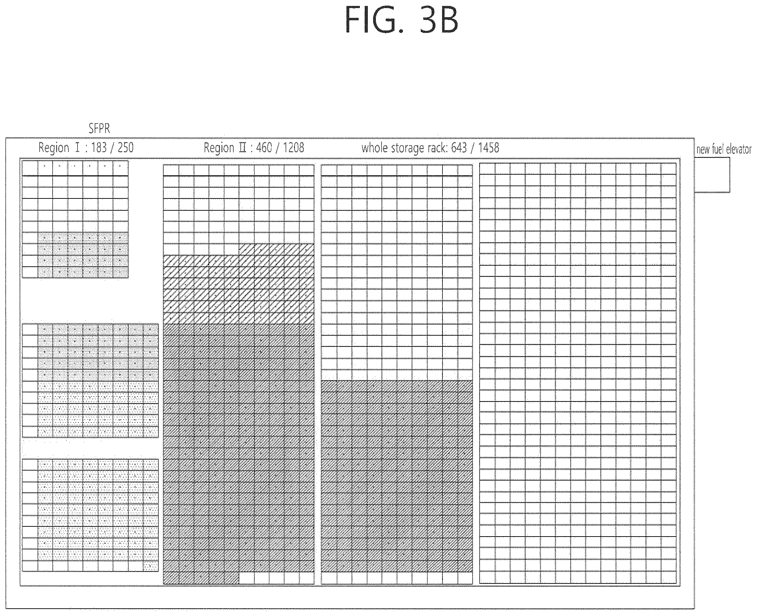

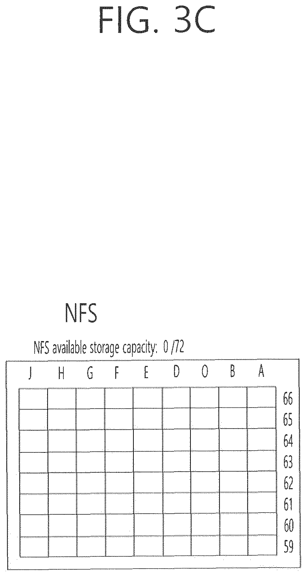

FIG. 2 illustrates an embodiment of data in which the nuclear fuel flowchart is recorded. Referring to FIG. 2, information on the order of movement of fuels, nuclear fuel number, information on unloading, information on loading, information on time, and the like, are recorded in the movement flowchart of nuclear fuels. In order to facilitate understanding of the explanation, places where nuclear fuels are located may be schematized as illustrated in FIGS. 3A, 3B and 3C.

Referring to FIGS. 3A to 3C, in the present embodiment, movements of nuclear fuels may include storing new fuels in a new fuel storage (NFS), moving the new fuels stored in the NFS to store the same in a spent fuel pool rack (SFPR), moving spent fuels from a reactor(Rx) to store the same in the SFPR, insert replacement, and moving the new fuels and reloaded fuels from the SFPR to load the same to the Rx. Movement of the nuclear fuels should be accurately followed according to types of fuel and types of storage rack.

All fuel movements are carried out after a movement flowchart of the nuclear fuels is created and examined. The movement flowchart illustrated in FIG. 2 is created for each kind of nuclear power plant, and the amount thereof is generally enormous. For example, data on the order of movements of nuclear fuels amounts to about 60 pages in the case of OPR1000 nuclear power plant and amounts to about 80 pages in the case of APR1400 nuclear power plant.

During a manual operation of the fuel movement flowchart, the movement order of nuclear fuels, unique number of nuclear fuels, the storage rack coordinates, and the like, must be accurately checked and properly written. Thus, manual operation of such a fuel movement flowchart by an operator involves a great deal of work time and a human error such as typo, or the like. In addition, it is not easy to verify the coordinates of reactors and spent fuel storage racks in the movement verification of nuclear fuels, and an enormous amount of time is taken for verification.

Hereinafter, each step according to the present embodiment to be described was devised to be focused on efficiency and safety of management of nuclear fuel movement. In terms of efficiency, a user may perform a minimum number of tasks such as input file selection, pattern selection, and storage range selection, and all other tasks may be processed in a modular manner. Therefore, in terms of safety, a human error of a fuel movement manager and an operator may be minimized. This configuration will be described hereinafter.

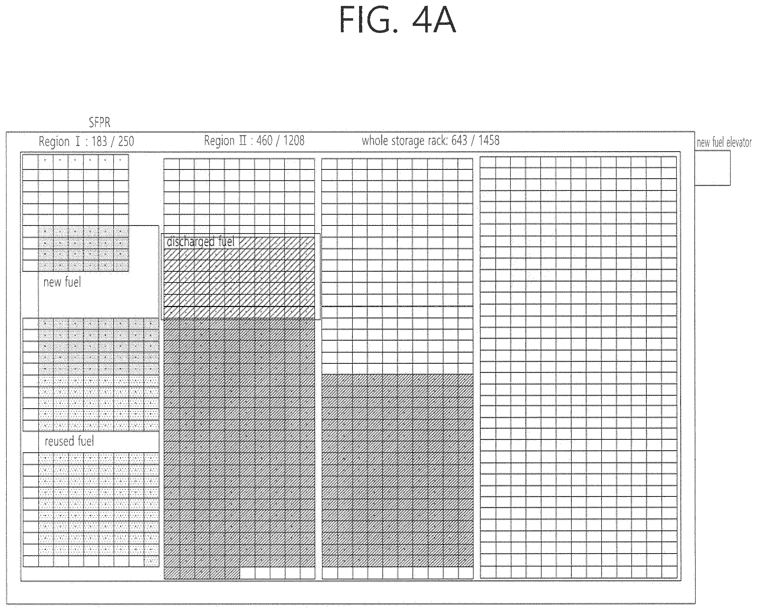

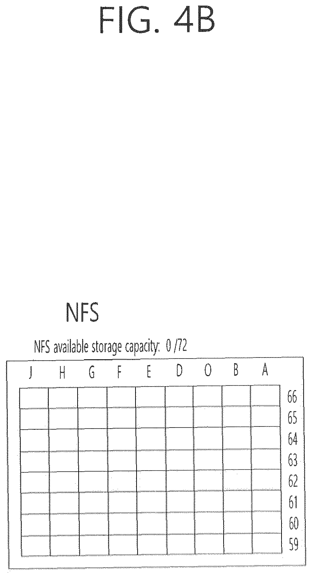

In step (a) (S10), a storage status map in which storage racks of the SFPR storing spent fuels and the NFS storing new fuels are mapped may be loaded. FIGS. 4A and 4B illustrate storage status maps of nuclear fuels according to the present embodiment. Referring to FIG. 4, the storage status map is obtained by numbering and mapping the SFPR (FIG. 4A), which is a spent fuel storage rack, and a storage rack of the NFS (FIG. 4B), which is a new fuel storage. In step (a) (S10), inputs of the latest fuel storage status files of the SFPR and the NFS are received, and a storage status map of nuclear fuels corresponding to the current storage state is loaded.

Although not illustrated in FIG. 4, the storage status map may further include information in which each storage space of the reactor(Rx) is mapped. Those skilled in the art will understand that the storage status map loaded in step (a) (S10) is a platform to which information about areas or compartments from or to which nuclear fuels is unloaded or loaded is mapped according to the principle of the present embodiment. The user may easily create a movement flowchart of nuclear fuels through the loaded storage status map.

In step (b) (S30), storage locations and colors of nuclear fuels may be designated in the storage status map. In this embodiment, in step (b) (S30), nuclear fuels may be classified into three types of new fuels, reused fuels, and discharged fuels and designated in the storage status map. The moved nuclear fuels may be classified into the three types as described above, and the respective fuels are set to have different colors by types. In FIG. 3, it can be seen that the reused fuels, new fuels, and discharged fuels are designated in different colors in the storage status map.

In step (c) (S50), a movement flowchart may be created upon receiving the movement order and a positioning operation of the nuclear fuels in a pattern form. The fuel movement order and positioning tasks may be minimized using the pattern. In this embodiment, patterns that may appear when fuels are unloaded from or loaded to the reactor(Rx) may include an unloading pattern, a loading pattern, and a refueling machine master direction pattern. The unloading pattern refers to a fuel movement pattern when the nuclear fuels are unloaded from the reactor(Rx), the loading pattern refers to a fuel movement pattern when the nuclear fuels are loaded into the reactor(Rx), and the refueling machine master direction pattern refers to a pattern for determining whether a crane and a wall surface interfere with each other when fuels are moved. In this manner, in step (c) (S50), pattern information is defined in consideration of fuel unloading, fuel loading, and fuel movement, so that when a necessary pattern is selected, unloading and loading may be performed in the defined order.

In step (c) (S50), a movement flowchart may be created upon receiving codes abbreviating unloading areas and loading areas of nuclear fuels. The codes are an example of a kind of movement patterns as illustrated in Table 1 below.

**[Table 1]**

| Sequence | Pattern | Start position | End position | Information |
|---|---|---|---|---|
| 1-A | C2U | K1 (coordinate) | | |
| 1-B | U2S | | | |
| 2 | C2C | M4 | K1 | |
| 3-A | C2U | J1 | | |
| 3-B | U2S | | | |
| | IMF | | | RM mater direction care |

A basic unit of nuclear fuel movement may be identified by unloading and loading. In Table 1, as abbreviation codes of an unloading region of nuclear fuels and a loading region of nuclear fuels, C2U stands for CORE TO UPENDER, U2S stands for UPENDER TO SFPR, C2C stands for CORE TO CORE, S2S stands for SFPR TO SFPR, and IMF stands for INFORMATION.

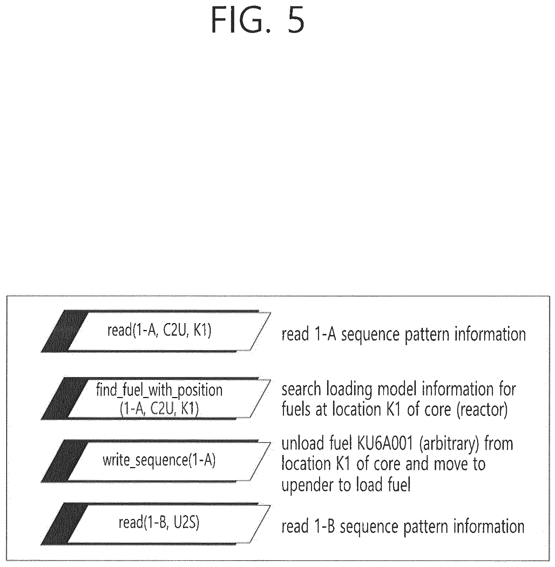

In step (c) (S50), pattern information of Table 1 may be processed as illustrated in FIG. 5.

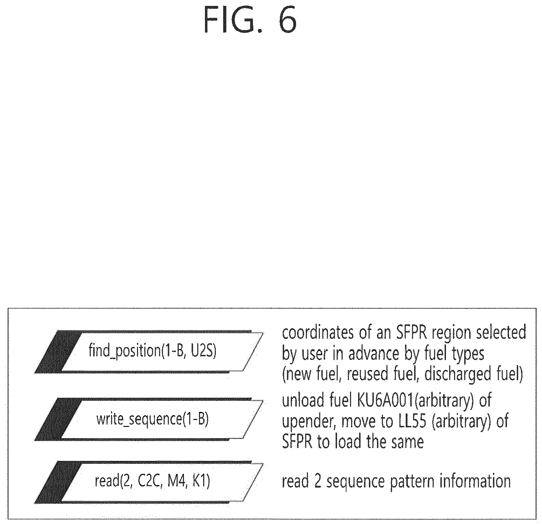

If the fuel movement pattern starts at SFPR and coordinates are not assigned, the pattern information may be processed as illustrated in FIG. 6.

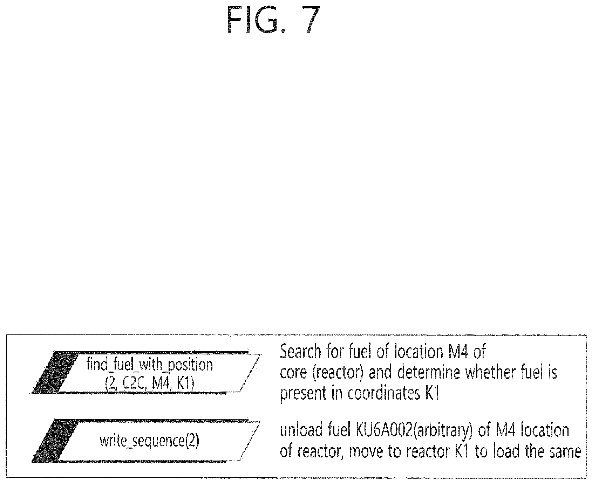

If the fuel movement pattern starts at Core, the pattern information may be processed as illustrated in FIG. 7.

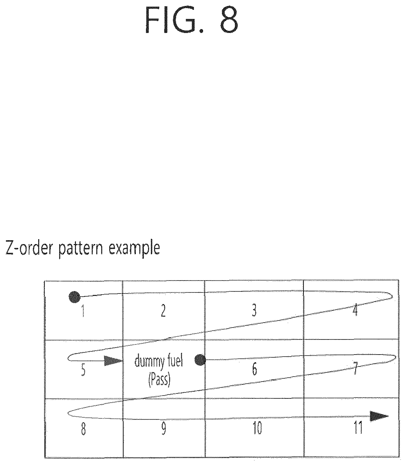

In step (c) (S50), a movement flowchart may be created according to predetermined patterns of unloading and loading order, upon receiving a region to be unloaded or loaded in the storage status map, as a region range from the user. For example, as illustrated in FIG. 8, the predetermined pattern may be a Z-order pattern. When the user selects the Z order pattern as an SFPR storage method and sets a range of the storage region in the storage status map, the processor may determine an available storage cell and store the same as the Z order pattern.

In addition, in this embodiment, in order to help recognition of the fuel movement operator, a concept of pre-alignment may be supported in the pattern, in addition to the Z order pattern storage of the SFPR. The user may align the SFPR storage order of the new fuels and reused fuels in advance according to the order of the loading pattern by the pre-sorting function. The pre-sorting allows fuels of the SFPR to be unloaded in a sequential and intuitive order, like the example of the Z-order pattern described above.

According to the present embodiment, when the user performs a minimum operation to select a pattern for unloading or loading fuels and a storage location of the SFPR, a flowchart of the fuel movement may be created and the fuel storage status may be recorded and managed as a database.

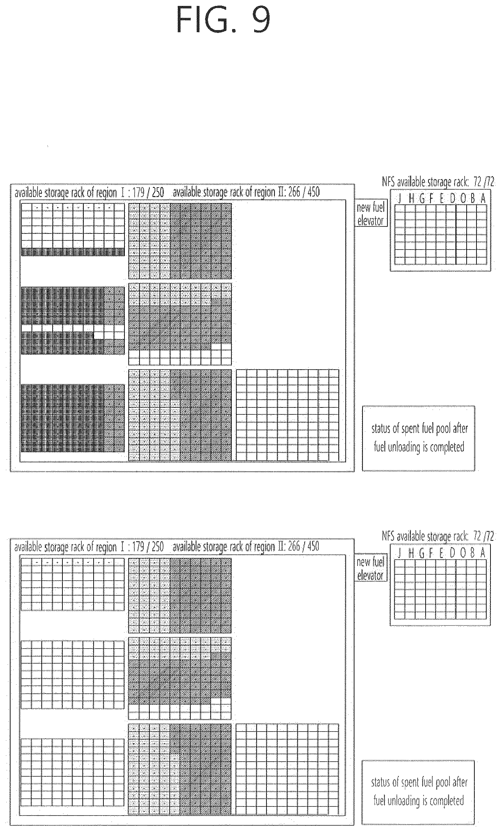

In step (d) (S70), the storage status map may be updated according to the degree of execution of the movement flowchart. FIG. 9 illustrates a state in which the fuel storage status is recorded and updated on the storage status map according to the present embodiment. Referring to FIG. 9, the fuel storage status is automatically recorded in the storage status map. When the user inputs a movement time after completion of the movement, movement storage coordinates of fuels classified as new fuels, reused fuels, and discharged fuels by stages may be updated on the database.

According to another aspect of the present embodiment, the above-described nuclear fuel simulation method may be implemented as a computer program. The program for managing movements of nuclear fuels may execute, in a computer including a database storing a storage status map to which storage racks of the SFPR storing spent fuels and NFS storing new fuels are mapped and a processor creating a movement flowchart of nuclear fuels using information input to the storage status map, step (a) of loading a storage status map by a processor (S10); step (b) of receiving designated storage locations and colors of nuclear fuels in the storage status map from the user (S30); step (c) of creating a movement flowchart by receiving, by the processor, the movement order and location designating operations of nuclear fuels in a pattern form (S50); and step (d) of updating, by the process, the storage status map according to a degree of performing the movement flowchart and storing the updated storage status map in a database (S70). Each step of the program means that the simulation method described above with reference to FIG. 1 is executed in conjunction with hardware, so detailed description thereof will be omitted.

While the present invention has been particularly shown and described with reference to exemplary embodiments thereof, a person skilled in the art will understand that the invention is not limited to the disclosed exemplary embodiments but may be variously modified within the scope of the present invention. Therefore, the scope of the present invention should not be limited to the above-described embodiments but should be determined by all changes or modifications derived from the scope of the appended claims and equivalents of the following claims.

## Claims

1. A method for managing movements of nuclear fuels, the method comprising:
step (a) of loading a storage status map in which storage racks of a spent fuel pool rack (SFPR) where spent fuels are stored and a new fuel storage (NFS) where new fuels are stored are mapped;
step (b) of designating storage locations and colors of nuclear fuels in the storage status map;
step (c) of creating a movement flowchart upon receiving movement order and location designation tasks of nuclear fuel in a pattern form; and
step (d) of updating the storage status map according to a degree of performing the movement flowchart.

2. The method of claim 1, wherein
in step (b), nuclear fuels are classified into three types of new fuels, reused fuels, and discharged fuels and stored in the storage status map.

3. The method of claim 1, wherein
in step (c), the movement flowchart is created upon receiving codes in which an unloading region of nuclear fuels and a loading region of nuclear fuels are abbreviated.

4. The method of claim 1, wherein
in step (c), the movement flowchart is created in unloading or loading order based on a predetermined pattern upon receiving a region to be unloaded or loaded in the storage status, as a region range, from a user.

5. A computer program stored in a medium to execute, in a computer which includes a database storing a storage status map in which storage racks of the SFPR storing spent fuels and NFS storing new fuels are mapped and a processor creating a movement flowchart of nuclear fuels using information input to the storage status map,
step (a) of loading a storage status map by a processor;
step (b) of receiving designated storage locations and colors of nuclear fuels in the storage status map from the user;
step (c) of creating a movement flowchart by receiving, by the processor, the movement order and location designating operations of nuclear fuels in a pattern form; and
step (d) of updating, by the process, the storage status map according to a degree of performing the movement flowchart and storing the updated storage status map in a database.
